# EUROPÄISCHE PATENTSCHRIFT

(11) **EP 2 828 964 B1**
(45) Veröffentlichungstag und Bekanntmachung des Hinweises auf die Patenterteilung: **03.01.2018**
(21) Anmeldenummer: 13700695.3
(22) Anmeldetag: 15.01.2013
(51) Int. Cl.: H02M 1/34, H02M 3/158

(54) **GLEICHSPANNUNGSWANDLER**
DC/DC CONVERTER
CONVERTISSEUR DE TENSION CONTINUE

(30) Priorität: 19.03.2012 DE 102012204255
(43) Veröffentlichungstag der Anmeldung: 28.01.2015
(73) Patentinhaber: Siemens Aktiengesellschaft, 80333 München (DE)
(72) Erfinder: CESNAK, Lorand, A-2253 Weikendorf (AT)
(86) Internationale Anmeldenummer: PCT/EP2013/050632
(87) Internationale Veröffentlichungsnummer: WO 2013/139492

(56) Entgegenhaltungen:
- DE-A1-102007 041 510
- DE-B1- 2 718 996
- US-A- 6 051 961
- US-A1- 2012 049 818
- OGURA K ET AL: "Boost chopper-fed ZVS-PWM DC-DC converter with parasitic oscillation surge suppression-based auxiliary edge resonant snubber", INTELEC 2003. 25TH. INTERNATIONAL TELECOMMUNICATIONS ENERGY CONFERENCE. YOKOHAMA, JAPAN, OCT. 19 - 23, 2003; [INTELEC. INTERNATIONAL TELECOMMUNICATIONS ENERGY CONFERENCE], TOKYO, IEICE, JP, 23. Oktober 2003 (2003-10-23), Seiten 20-26, XP031895451, ISBN: 978-4-88552-196-6
- MOSCHOPOULOS G ET AL: "A new family of zero-voltage-transition PWM converters with dual active auxiliary circuits", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, Bd. 2, 6. März 2005 (2005-03-06), Seite 1251, XP010809456, DOI: 10.1109/APEC.2005.1453164 ISBN: 978-0-7803-8975-5
- XINKE WU ET AL: "A novel fully soft switched (zero voltage on and zero current off) boost converter with reduced conduction loss", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, IEEE, CONFERENCE RECORD OF THE 2005 IEEE INDUSTRY APPLICATIONS CONFERENCE FORTIETH IAS ANNUAL MEETING (IEEE CAT., Bd. 3, 2. Oktober 2005 (2005-10-02), Seiten 1973-1979, XP010842666, DOI: 10.1109/IAS.2005.1518718 ISBN: 978-0-7803-9208-3

## Beschreibung

### Technisches Gebiet

Die Erfindung betrifft einen Gleichspannungswandler, in welchem mittels eines oder mehrerer Halbleiterschalter, etwa Transistoren, zyklisch ein aktiver Energiespeicher, wie eine Induktivität, aufladbar und entladbar ist.

Ein Gleichspannungswandler, auch DC-DC-Wandler genannt, bezeichnet eine elektrische Schaltung, welche eine am Eingang zugeführte Gleichspannung (Eingangsspannung) in eine Gleichspannung mit höherem, niedrigerem oder invertiertem Spannungsniveau umwandelt (Ausgangsspannung). Die Umsetzung erfolgt mithilfe eines periodisch arbeitenden elektronischen Schalters und eines oder mehrerer Energiespeicher. Die zur Zwischenspeicherung der Energie benutzte Induktivität (induktiver Wandler) besteht aus einer Spule oder einem Wandler-Transformator. Im Gegensatz dazu werden Wandler mit kapazitiver Speicherung (kapazitiver Wandler) als Ladungspumpen bezeichnet.

Die gegenständliche Erfindung wird vorzugsweise auf Aufwärtswandler und/oder Abwärtswandler angewendet. Beide Ausführungsformen verwenden eine Induktivität, etwa eine Speicherdrossel, als Zwischenspeicher für die Energie. Bei einem Aufwärtswandler ist die Ausgangsspannung stets größer als oder gleich wie die Eingangsspannung, bei einem Abwärtswandler ist die Ausgangsspannung stets kleiner als oder gleich wie die Eingangsspannung.

### Stand der Technik

Weil die Schaltgeschwindigkeiten der meist als Halbleiterschalter verwendeten Transistoren (z.B. IGBT, FET, SIC-FET) immer größer werden, verursachen die parasitären Induktivitäten in den Zuleitungen zum Gleichspannungswandler immer größere Spannungsüberschwinger am Transistor. Um diese Spannungsüberschwinger zu reduzieren, ist es notwendig, die Schaltungen zu verändern und/oder Zusatzschaltungen einzubauen.

Eine mögliche Veränderung der bestehenden Schaltung besteht darin, den Gate-Widerstand am Transistor zu erhöhen. Dadurch wird jedoch der Vorteil des schnellen Transistors vernichtet und die Schaltverluste steigen.

Eine erste Zusatzschaltung besteht in der Beschaltung des Transistors mit einem RC-Glied, also einem Widerstand R und einem Kondensator C. Die Ausschaltverluste des Transistors werden damit teilweise auf das RC-Glied übertragen, die Einschaltverluste und Leitverluste steigen aber, weil das RC-Glied schnell entladen wird.

Eine zweite Zusatzschaltung besteht in der Beschaltung des Transistors mit einem RCD-Glied, welches zusätzlich zum RC-Glied eine Diode D umfasst. Diese Diode ermöglicht es, die Verluste im Widerstand des RCD-Glieds zu verringern. Durch Erhöhen des Widerstands des RCD-Glieds können die Verluste, die durch das Entladen des Kondensators des RCD-Glieds im Schalter entstehen, verringert werden.

So ist gemäß der US 5 986 905 A ein Sperrwandler (englisch: flyback converter) bekannt, der zur Dämpfung der Spannung nach einem Schalter, der als MOSFET oder bipolarer Transistor ausgeführt ist, ein RCD-Glied vorschlägt. Ein sogenannter Sperrwandler hat als Energiespeicher eine gekoppelte Speicherdrossel mit Luftspalt. Die Speicherdrossel ist wie ein Transformator aufgebaut, allerdings mit einem Luftspalt im Kern, welcher der Energiespeicherung dient. Das RCD-Glied besteht beim Beispiel in Fig. 1 der US 5 986 905 A aus einer Diode, die in Serie geschaltet ist mit einer Parallelschaltung aus einem Kondensator und einem Widerstand. Das RCD-Glied in der US 5 986 905 A ist in Serie zum Schalter angeordnet.

Die DE 36 16 160 A1 betrifft einen DC/DC-Eintaktdurchflusswandler und schlägt zur Abschwächung von Spannungsüberschwingern die Anordnung einer RC- oder RCD-Schaltung des Transistors vor. Diese Entlastungsschaltung des Transistors besteht aus der Reihenschaltung einer Drossel mit zwei Dioden, welche vom Minuspol in Durchlassrichtung zum Pluspol der Eingangsspannung UE geschaltet ist, und aus einem Kondensator, der zwischen dem Verbindungspunkt der beiden Dioden und dem Kollektor des Transistors liegt.

Bekannte Ausführungen des RCD-Glieds haben den Nachteil, dass sie in einem Gerät, welches sowohl als Abwärtswandler (Tiefsetzer), etwa zum Laden einer Batterie, als auch als Aufwärtswandler (Hochsetzer), etwa zum Stützen des Stromnetzes aus einer Batterie, dient, nicht einsetzbar sind, weil beim Tiefsetzen das RCD-Glied beim Hochsetzertransistor T_{H} beim Einschalten des Tiefsetztransistors T_{T} geladen wird und sehr hohe Einschaltverluste im Tiefsetzertransistor T_{T} verursachen würde und beim Hochsetzen das RCD-Glied beim Tiefsetzertransistor T_{T} beim Einschalten des Hochsetzertransistors T_{H} geladen wird und sehr hohe Einschaltverluste im Hochsetzertransistor T_{H} verursachen würde.

### Darstellung der Erfindung

Es ist eine Aufgabe der vorliegenden Erfindung, einen Gleichspannungswandler zur Verfügung zu stellen, welcher die Bedämpfung der Spannungsüberschwinger eines Halbleiterschalters, insbesondere eines Transistors, mit einem RCD-Glied sowohl beim Betrieb als Abwärtswandler als auch beim Betrieb als Aufwärtswandler gewährleistet.

Diese Aufgabe wird durch einen Gleichspannungswandler mit den Merkmalen der Patentansprüche 1 und 2 gelöst. Gemäß Anspruch 1 ist vorgesehen, dass zur Vermeidung von Spannungsüberschwingern für zumindest einen Halbleiterschalter ein RCD-Glied vorgesehen ist, wobei der Kondensator und die Diode des RCD-Glieds zueinander in Serie geschaltet sind und der Widerstand des RCD-Glieds mittels eines Schalters entweder parallel zur Diode zuschaltbar oder wegschaltbar ist, und wobei die Diode des RCD-Glieds so angeordnet ist, dass sie in Durchlassrichtung des Halbleiterschalters sperrt.

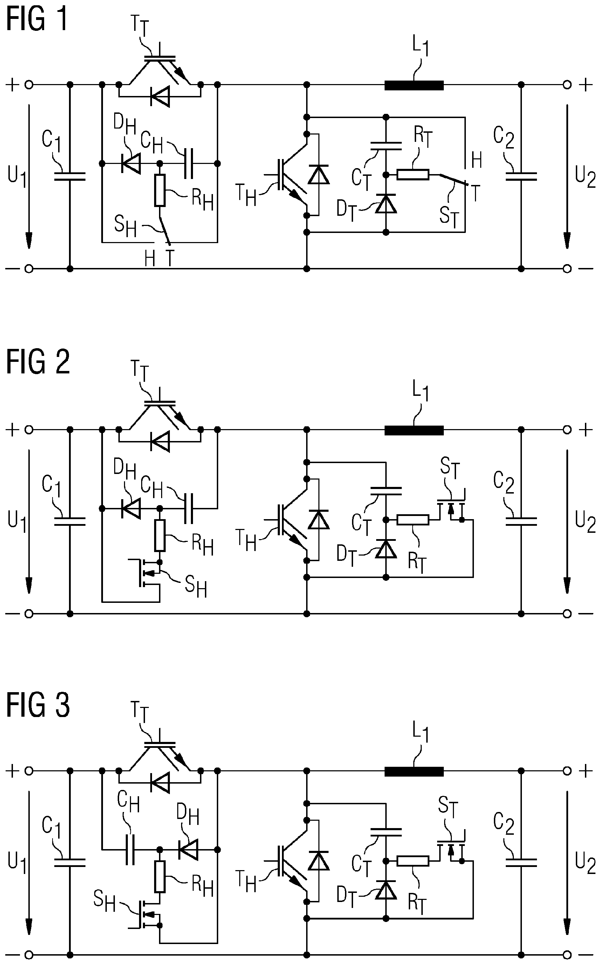

Die Funktionsweise der erfindungsgemäßen Schaltung lässt sich etwa anhand von Fig. 1 beschreiben: Beim Ausschaltvorgang des Tiefsetzertransistors T_{T} fällt die Spannung am Emitter mit sehr hoher Geschwindigkeit (großes dU/dt). Diese Spannungssteilheit wird ab einem gewissen Zeitpunkt des Ausschaltvorgangs reduziert, weil der Strom oder ein Teil des Stromes, der durch Tiefsetzertransistor T_{T} geflossen ist, von dem Kondensator C_{T} und der Diode D_{T} übernommen wird. Dieser Strom beginnt schon beim Schaltvorgang zu fließen und nicht erst, wenn die Spannung am Hochsetzertransistor T_{H} die Flussspannung der Freilaufdiode vom Hochsetzertransistor T_{H} erreicht hat.

Wenn der Widerstand des RCD-Glieds von der Diode weggeschaltet ist, kann dieser entweder funktionslos sein, oder es kann vorgesehen sein, dass er parallel zum Kondensator des RCD-Glieds geschaltet ist. Letzteres geschieht, um den Kondensator zu entladen. Sonst wird dieser beim ersten Einschalten des Transistors, der parallel zum RCD-Glied ist, entladen. Wenn der Transistor zu schnell eingeschaltet wird, kann es zu Zerstörung des Transistors und oder/der Diode des RCD-Glieds kommen.

Die Diode des RCD-Glieds muss so angeordnet sein, dass sie in derselben Richtung leitet wie die Freilaufdiode des Transistors. Mit anderen Worten, die Diode ist gegenüber der üblichen Flussrichtung umgedreht.

Eine Ausführungsform der Erfindung bezieht sich darauf, dass das RCD-Glied parallel zu einem Halbleiterschalter geschaltet ist, insbesondere direkt am Ein- und Ausgang des Halbleiterschalters angeschlossen ist.

Bei einem kombinierten Auf- und Abwärtswandler (Hoch- und Tiefsetzer) gibt es zwei betätigbare (steuerbare) Schalter, einen zwischen Eingang und Spule (Tiefsetzschalter) für die Funktion als Abwärtswandler (Tiefsetzer), einen zwischen dem Verbindungspunkt von Tiefsetzschalter und Spule und Minuspol (parallel zur Spule mit Kondensator) für die Funktion als Aufwärtswandler (Hochsetzer). Das RCD-Glied für die Bedämpfung des Schalters des Abwärtswandlers (Tiefsetzers) ist dann parallel zum Schalter für den Aufwärtswandler (Hochsetzer) angeordnet, das RCD-Glied für die Bedämpfung des Schalters des Aufwärtswandlers (Hochsetzers) ist dann parallel zum Schalter für den Abwärtswandler (Tiefsetzer) angeordnet.

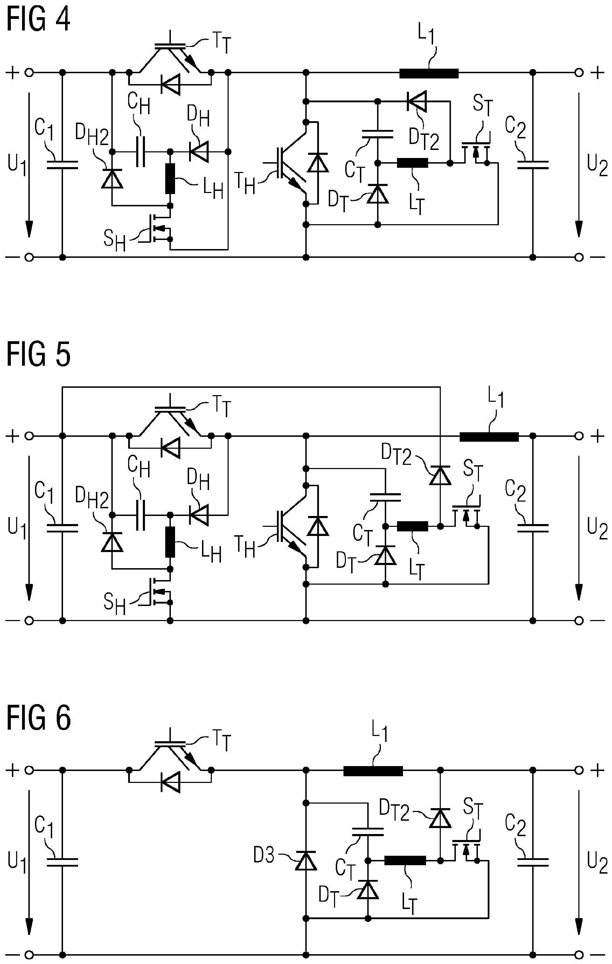

Bei einem nicht zur Erfindung gehörenden Gleichspannungswandler, der nur als Abwärtswandler (Tiefsetzer) ausgeführt ist, wäre der Schalter für den Aufwärtswandler (Hochsetzer) durch einen nicht schaltbaren (nicht gesteuerten) "Schalter" ersetzt, nämlich durch eine Freilaufdiode. Das RCD-Glied für die Bedämpfung des Schalters des Aufwärtswandlers (Hochsetzers) entfällt dann, das RCD-Glied für die Bedämpfung des Schalters des Abwärtswandlers (Tiefsetzer) ist dann parallel zur Freilaufdiode angeordnet. Dies ist in Fig. 6 dargestellt.

Analog verhält es sich mit einem nicht zur Erfindung gehörenden Gleichspannungswandler, der nur als Aufwärtswandler (Hochsetzer) ausgeführt ist: der Schalter für den Abwärtswandler (Tiefsetzer) wird durch einen nicht schaltbaren (nicht gesteuerten) "Schalter" ersetzt, nämlich durch eine Diode. Das RCD-Glied für die Bedämpfung des Schalters des Abwärtswandlers (Tiefsetzers) entfällt dann, das RCD-Glied für die Bedämpfung des Schalters des Aufwärtswandlers (Hochsetzers) ist dann parallel zur Freilaufdiode angeordnet.

Der Schalter zum Umschalten des Widerstands kann als Relais ausgeführt sein, was den Vorteil hat, dass die Ansteuerung eines Relais einfacher zu realisieren ist als eine Ansteuerung für einen Transistor. Weiters ist durch die Umschaltung sichergestellt, dass der Kondensator des RCD-Glieds, das parallel zum Transistor ist, vor dem Zuschalten von diesem Transistor entladen ist.

Der Schalter zum Zuschalten des Widerstands kann als Transistor ausgeführt sein, was den Vorteil hat, dass dieser mit der Schaltfrequenz des Tief- oder Hochsetzers geschalten werden kann und die Vorladung des Kondensators auf einen bestimmten Wert möglich ist.

Die Ausführungsvariante, dass eine Ladeschaltung für den Kondensator des RCD-Glieds vorgesehen ist, hat den Vorteil, dass die Energie, die im Kondensator gespeichert wird, nicht im Widerstand vernichtet wird, sondern wieder rückgespeist wird.

Zur Einsparung eines Widerstands und eines Schalters bei zwei RCD-Gliedern kann vorgesehen sein, dass zwei Halbleiterschalter mit jeweils einem RCD-Glied vorgesehen sind und die beiden RCD-Glieder lediglich einen gemeinsamen Widerstand und einen gemeinsamen Schalter aufweisen.

Das erfindungsgemäße aber nicht beansprüchte Verfahren zum Betrieb eines Gleichspannungswandlers mit zwei steuerbaren Halbleiterschaltern, nämlich einen Tiefsetzertransistor und einen Hochsetzertransistor, sieht vor, dass für den Betrieb als Abwärtswandler (Tiefsetzer) nur der Tiefsetzertransistor eingeschaltet wird, der Widerstand im parallel zum Tiefsetzertransistor T_{T} geschalteten RCD-Glied parallel zum Kondensator geschaltet wird und der Widerstand im parallel zum Hochsetzertransistor geschalteten RCD-Glied parallel zur Diode geschaltet oder ausgeschaltet wird.

Für den Betrieb als Aufwärtswandler (Hochsetzer) ist vorgesehen, dass nur der Hochsetzertransistor eingeschaltet wird, der Widerstand im parallel zum Hochsetzertransistor geschalteten RCD-Glied parallel zum Kondensator geschaltet wird und der Widerstand im parallel zum Tiefsetzertransistor geschalteten RCD-Glied parallel zur Diode geschaltet oder ausgeschaltet wird.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
Figur 1 einen schematisch dargestellten, erfindungsgemäßen Gleichspannungswandler mit Relais zur Umschaltung der Widerstände in den RCD-Gliedern,
Figur 2 einen schematisch dargestellten, erfindungsgemäßen Gleichspannungswandler mit Transistoren zur Umschaltung der Widerstände in den RCD-Gliedern,
Figur 3 eine Schaltungsvariante zu Fig. 2,
Figur 4 die Schaltungsvariante aus Fig. 3 mit elektronischer Ladeschaltung für die Kondensatoren des RCD-Glieds,
Figur 5 die Schaltungsvariante aus Fig. 3 mit einer weiteren Ausführungsform der elektronischen Ladeschaltung für die Kondensatoren des RCD-Glieds,
Fig. 6 einen als Abwärtswandler (Tiefsetzer) ausgebildeten nicht zur Erfindung gehörenden Gleichspannungswandler mit einer elektronischen Ladeschaltung für den Kondensator des RCD-Glieds, welche jener aus Fig. 5 entspricht,
Fig. 7 einen schematisch dargestellten, erfindungsgemäßen Gleichspannungswandler mit zwei Halbbrücken,
Fig. 8 einen schematisch dargestellten, erfindungsgemäßen Gleichspannungswandler nur mit einem Relais und Widerstand zum Umschalten der RCD-Glieder.

### Ausführung der Erfindung

In Fig. 1 ist ein erfindungsgemäßer Auf- und Abwärtswandler dargestellt. Ein herkömmlicher Auf- und Abwärtswandler in seiner Grundschaltung umfasst lediglich den Eingangskondensator C₁, den Ausgangskondensator C₂, den sogenannten Tiefsetzertransistor T_{T}, den Hochsetzertransistor T_{H}, sowie die Spule (Induktivität) L₁.

Zum Tiefsetzertransistor T_{T} und zum Hochsetzertransistor T_{H} ist jeweils eine Freilaufdiode antiparallel geschaltet. Im Tiefsetzbetrieb wechselt (kommutiert) der Strom von T_{T} auf die Freilaufdiode, die antiparallel zu T_{H} ist. Im Hochsetzbetrieb wechselt (kommutiert) der Strom von T_{H} auf die Freilaufdiode, die antiparallel zu T_{T} ist. Diese Dioden sind meistens im Gehäuse eines IGBT-s integriert, können aber auch antiparallel zum IGBT angeordnet sein und ein eigenes Gehäuse haben.

Das erfindungsgemäße RCD-Glied ist nicht in unmittelbarer Nähe des zu schützenden Transistors angeordnet, sondern dort, wo die sogenannte "Freilaufdiode" angeordnet wäre, wenn der Gleichspannungswandler nur als Abwärtswandler (Tiefsetzer) oder nur als Aufwärtswandler (Hochsetzer) ausgeführt wäre: das RCD-Glied, das den Tiefsetzertransistor T_{T} schützt, besteht aus den Bauteilen Widerstand R_{T}, Kondensator C_{T} und Diode D_{T} und ist parallel zum Hochsetzertransistor T_{H} geschaltet, bzw. parallel zur Serienschaltung aus Spule L1 und Ausgangskondensator C₂. Dabei sind Kondensator C_{T} und Diode D_{T} in Serie zueinander geschaltet, der Kondensator C_{T} ist in Stromflussrichtung des Hochsetztransistors T_{H} (hier vom oberen Pluspol zum unteren Minuspol) vor der Diode D_{T} angeordnet. Zwischen Kondensator C_{T} und Diode D_{T} ist der Widerstand R_{T} angeschlossen, der mittels eines Schalters S_{T}, der hier als Relais ausgeführt ist, entweder parallel zum Kondensator C_{T} oder der Diode D_{T} geschaltet werden kann. Es wäre auch denkbar, dass der Widerstand R_{T} in einer anderen Ausführungsvariante ganz weggeschaltet wird.

Das RCD-Glied, das den Hochsetzertransistor T_{H} schützt, besteht aus den Bauteilen Widerstand R_{H}, Kondensator C_{H} und Diode D_{H} und ist parallel zum Tiefsetzertransistor T_{T} geschaltet. Dabei sind Kondensator C_{H} und Diode D_{H} in Serie zueinander geschaltet, der Kondensator C_{H} ist in Stromflussrichtung des Tiefsetztransistors T_{T} (vom Emitter zum Kollektor) nach der Diode D_{H} angeordnet. Zwischen Kondensator C_{H} und Diode D_{H} ist der Widerstand R_{H} angeschlossen, der mittels eines Schalters S_{H}, der hier als Relais ausgeführt ist, entweder parallel zum Kondensator C_{H} oder der Diode D_{H} geschaltet werden kann. Es wäre auch denkbar, dass der Widerstand R_{H} in einer anderen Ausführungsvariante ganz weggeschaltet wird.

Wenn der Gleichspannungswandler wie in Fig. 1 dargestellt als Abwärtswandler (Tiefsetzer) arbeitet, etwa, wenn eine am Ausgang angeschlossene Batterie geladen werden soll, so arbeitet er von links nach rechts. Dabei wird nur der Tiefsetzertransistor T_{T} getaktet (eingeschaltet), der Hochsetzertransistor T_{H} bleibt ausgeschaltet, der Widerstand R_{H} im parallel zum Tiefsetzertransistor T_{T} geschalteten RCD-Glied wird parallel zum Kondensator C_{H} geschaltet, und der Widerstand R_{T} im parallel zum Hochsetzertransistor T_{H} geschalteten RCD-Glied wird parallel zur Diode D_{T} geschaltet. Dies ist durch die Schaltpositionen "T" der Schalter S_{H}, S_{T} dargestellt.

Soll der Gleichspannungswandler aus Fig. 1 als Aufwärtswandler (Hochsetzer) arbeiten, so arbeitet er von rechts nach links. Dabei wird nur der Hochsetzertransistor T_{H} getaktet (eingeschaltet), der Widerstand R_{T} im parallel zum Hochsetzertransistor T_{H} geschalteten RCD-Glied wird parallel zum Kondensator C_{T} geschaltet, und der Widerstand R_{H} im parallel zum Tiefsetzertransistor T_{T} geschalteten RCD-Glied wird parallel zur Diode D_{H} geschaltet. Dies ist durch die Schaltpositionen "H" der Schalter S_{H}, S_{T} dargestellt.

Die Ausführung nach Fig. 2 entspricht jener nach Fig. 1 mit dem Unterschied, dass für die Schalter S_{T} und S_{H} nicht Relais, sondern Halbleiterschalter vorgesehen sind, die so angeschlossen sind, dass sie den Widerstand R_{H} bzw. T_{H} entweder nur parallel zur Diode D_{H} bzw. R_{H} zuschalten oder gänzlich wegschalten können.

Wenn der Gleichspannungswandler in Fig. 2 als Abwärtswandler (Tiefsetzer) arbeitet, wird nur der Tiefsetzertransistor T_{T} getaktet (eingeschaltet), der Widerstand R_{H} im parallel zum Tiefsetzertransistor T_{T} geschalteten RCD-Glied wird weggeschaltet, und der Widerstand R_{T} im parallel zum Hochsetzertransistor T_{H} geschalteten RCD-Glied wird parallel zur Diode D_{T} geschaltet. Soll der Gleichspannungswandler aus Fig. 2 als Aufwärtswandler (Hochsetzer) arbeiten, so wird nur der Hochsetzertransistor T_{H} getaktet (eingeschaltet), der Widerstand R_{T} im parallel zum Hochsetzertransistor T_{H} geschalteten RCD-Glied wird weggeschaltet, und der Widerstand R_{H} im parallel zum Tiefsetzertransistor T_{T} geschalteten RCD-Glied wird parallel zur Diode D_{H} geschaltet.

Die Ausführung nach Fig. 3 entspricht jener nach Fig. 2 mit dem Unterschied, dass in Fig. 3 die Position des Kondensators C_{H} mit jener der Diode D_{H} vertauscht ist, also in Stromflussrichtung des Tiefsetztransistors T_{T} der Kondensators C_{H} vor der Diode D_{H} angeordnet ist. Der Widerstand R_{H} kann jedoch gleichfalls entweder mit dem Schalter S_{H} zur Diode D_{H} parallel geschaltet oder ganz weggeschaltet werden. Der Vorteil liegt in der Verwendung einer potentialfreien Versorgungsspannung für den Treiber für T_{T} und S_{H} und einer zweiten potentialfreien Versorgungsspannung für den Treiber für T_{H} und S_{T}. Eine Bootstrapschaltung für die Versorgung von T_{T} und S_{H} ist auch möglich.

In Fig. 4 ist eine elektronische Ladeschaltung für die Kondensatoren C_{H}, C_{T} der RCD-Glieder dargestellt. Damit ist es möglich, die Spannung, auf welche die Kondensatoren C_{H}, C_{T} geladen werden, festzulegen. Die Spannung, auf welche die Kondensatoren C_{H}, C_{T} aufgeladen werden, wird durch die Einschaltdauer und den Einschaltzeitpunkt der Ladeschaltung bestimmt.

Ausgehend von Fig. 3 werden die Widerstände R_{H} und R_{T} durch Spulen L_{H} und L_{T} ersetzt. Zusätzlich wird der Ausgang der Spule L_{H} über eine Diode D_{H2} auf den Eingang des Gleichspannungswandlers (vor den Tiefsetzertransistor T_{T}) zurückgeführt. Der Ausgang der Spule L_{T} wird über eine Diode D_{T2} unmittelbar vor den Hochsetzertransistor T_{H} zurückgeführt. Die Dioden sind dabei in Sperrrichtung - gegen die Stromflussrichtung der Transistoren T_{T} und T_{H} vom Emitter zum Kollektor - eingebaut.

In der Ausführungsvariante gemäß Fig. 5 wird - im Unterschied zu Fig. 4 - der Ausgang der Spule L_{T} über die Diode D_{T2} vor den Tiefsetzertransistor T_{T}, also an den Eingang des Gleichspannungswandlers, zurückgeführt.

In Fig. 6 ist ein nicht zur Erfindung gehörender Abwärtswandler (Tiefsetzer) dargestellt. Es können somit im Vergleich zu den Fig. 1-5 der Hochsetzertransistor T_{H} sowie das diesem zugeordnete RCD-Glied (R_{H} bzw. L_{H}, C_{H} und D_{H}) entfallen. An die Stelle des Hochsetzertransistors T_{H} tritt eine Freilaufdiode D₃, welche entgegen der Stromflussrichtung des Hochsetzertransistors T_{H} eingebaut ist. Bei dieser Ausführungsform ist es möglich, auch den Schalter S_{T} wegzulassen.

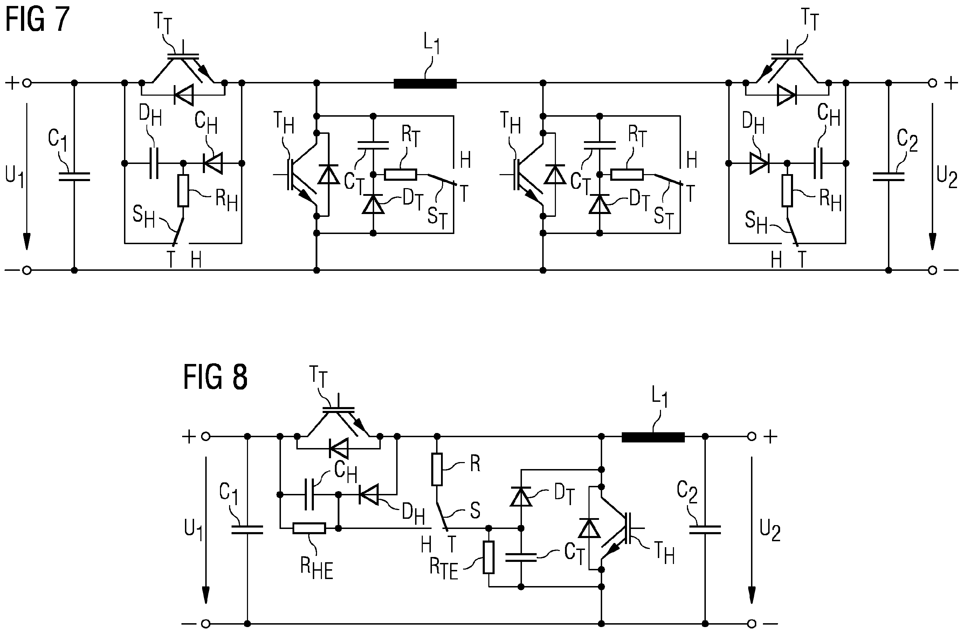

Es ist auch möglich eine zweite "Halbbrücke" (T_{T2} und T_{H2}) am Ausgang der Spule (zwischen Spule L₁ und Kondensator C₂) zu platzieren, siehe Fig. 7. Damit ist der Stromfluss in beide Richtungen unabhängig von der Größe der Eingangsspannung U₁ und von der Größe der Ausgangsspannung U₂ möglich.

In Fig. 8 sind die Positionen der Dioden und Kondensatoren im RCD-Glied im Vergleich zu Fig. 1 ausgetauscht. Damit ist es möglich ein Relais und einen der RCD-Widerstände einzusparen. Zusätzlich sind noch hochohmige Widerstände R_{HE} und R_{TE} parallel zu den Kondensatoren C_{H} und C_{T} der RCD-Glieder angeordnet. Diese gewährleisten, dass sich die Kondensatoren C_{H} und C_{T} im weggeschalteten Zustand des RCD-Gliedes entladen. Es ist auch möglich diese Widerstände wegzulassen, sodass der Hochsetztransistor T_{H} und der Tiefsetztransistor T_{T} die gespeicherte Energie im Kondensator des RCD-Gliedes beim Einschalten verbrennen können.

Grundsätzlich können die Schalter für die Widerstände der RCD-Glieder in allen gezeigten Ausführungsvarianten als elektromechanische Schalter (Relais) oder als elektronische Schalter ausgeführt werden.

### Bezugszeichenliste:

- C₁: Eingangskondensator
- C₂: Ausgangskondensator
- C_{H}: Kondensator des RCD-Glieds für den Transistor T_{H}
- C_{T}: Kondensator des RCD-Glieds für den Transistor T_{T}
- D₃: Freilaufdiode für Funktion als Abwärtswandler (Tiefsetzer)
- D_{H}: Diode des RCD-Glieds für den Transistor T_{H}
- D_{H2}: Diode für die Ladeschaltung des RCD-Glieds für den Transistor T_{H}
- D_{T}: Diode für die Ladeschaltung des RCD-Glieds für den Transistor T_{T}
- D_{T2}: Diode für die Ladeschaltung des RCD-Glieds für den Transistor T_{T}
- H: Schaltposition der Schalter S_{H}, S_{T} für die Funktion als Aufwärtswandler (Hochsetzer)
- L₁: Spule (Induktivität)
- L_{H}: Spule des RCD-Glieds für den Transistor T_{H}
- L_{T}: Spule des RCD-Glieds für den Transistor T_{T}
- R: gemeinsamer Widerstand
- R_{H}: Widerstand des RCD-Glieds für den Transistor T_{H}
- R_{HE}: Endladewiderstand des RCD-Glieds
- R_{T}: Widerstand des RCD-Glieds für den Transistor T_{T}
- R_{TE}: Endladewiderstand des RCD-Glieds
- S: gemeinsamer Schalter
- S_{H}: Schalter für den Widerstand R_{H} bzw. die Spule L_{H} des RCD-Glieds für den Transistor T_{H}
- S_{T}: Schalter für den Widerstand R_{T} bzw. die Spule L_{T} des RCD-Glieds für den Transistor T_{T}
- T: Schaltposition der Schalter S_{H}, S_{T} für die Funktion als Abwärtswandler (Tiefsetzer)
- T_{H}: Transistor als Schalter für die Funktion als Aufwärtswandler (Hochetzer), Hochsetzertransistor
- T_{T}: Transistor als Schalter für die Funktion als Abwärtswandler (Tiefsetzer), Tiefsetzertransistor
- U₁: Eingangsspannung
- U₂: Ausgangsspannung

## Patentansprüche

1. Gleichspannungswandler, der als Auf- und Abwärtswandler einsetzbar ist und in welchem mittels eines oder mehrerer Halbleiterschalter (T_{T}, T_{H}), etwa Transistoren, zyklisch eine Induktivität (L₁) als aktiver Energiespeicher aufladbar und entladbar ist, **dadurch gekennzeichnet, dass** zur Vermeidung von Spannungsüberschwingern für zumindest einen Halbleiterschalter (T_{T}, T_{H}) ein RCD-Glied vorgesehen ist, wobei der Kondensator (C_{T}, C_{H}) und die Diode (D_{T}, D_{H}) des RCD-Glieds zueinander in Serie geschaltet sind und der Widerstand (R, R_{T}, R_{H},) des RCD-Glieds mittels eines Schalters (S, S_{T}, S_{H}) entweder parallel zur Diode (D_{T}, D_{H}) zuschaltbar oder wegschaltbar ist, und wobei die Diode (D_{T}, D_{H}) des RCD-Glieds so angeordnet ist, dass sie in Durchlassrichtung des Halbleiterschalters (T_{T}, T_{H}) sperrt.

2. Gleichspannungswandler, der als Auf- und Abwärtswandler einsetzbar ist und in welchem mittels eines oder mehrerer Halbleiterschalter (T_{T}, T_{H}), etwa Transistoren, zyklisch eine Induktivität (L₁) als aktiver Energiespeicher aufladbar und entladbar ist, **dadurch gekennzeichnet, dass** zur Vermeidung von Spannungsüberschwingern für zumindest einen Halbleiterschalter (T_{T}, T_{H}) ein LCD-Glied vorgesehen ist, wobei der Kondensator (C_{T}, C_{H}) und die Diode (D_{T}, D_{H}) des LCD-Glieds zueinander in Serie geschaltet sind und die Induktivität (L_{T}, L_{H},) des LCD-Glieds mittels eines Schalters (S, S_{T}, S_{H}) entweder parallel zur Diode (D_{T}, D_{H}) zuschaltbar oder wegschaltbar ist, und wobei die Diode (D_{T}, D_{H}) des LCD-Glieds so angeordnet ist, dass sie in Durchlassrichtung des Halbleiterschalters (T_{T}, T_{H}) sperrt.

## Claims

1. DC/DC converter, which can be used as an upward and downward converter and in which by means of one or more semiconductor switches (T_{T}, T_{H}), such as transistors, an inductance (L₁) in the form of an active energy store, can be periodically charged and discharged, **characterised in that** to avoid voltage overshoots for at least one semiconductor switch (T_{T}, T_{H}) an RCD element is provided, wherein the capacitor (C_{T}, C_{H}) and the diode (D_{T}, D_{H}) of the RCD element are connected to one another in series and the resistor (R, R_{T}, R_{H}) of the RCD element can be connected either in parallel to the diode (D_{T}, D_{H}) or disconnected from it by means of a switch (S, S_{T}, S_{H}), and wherein the diode (D_{T}, D_{H}) of the RCD element is arranged such that it blocks in the conducting direction of the semiconductor switch (T_{T}, T_{H}).

2. DC/DC converter, which can be used as an upward and downward converter and in which by means of one or more semiconductor switches (T_{T}, T_{H}), such as transistors, an inductance (L₁) in the form of an active energy store, can be periodically charged and discharged, **characterised in that** to avoid voltage overshoots for at least one semiconductor switch (T_{T}, T_{H}) an LCD element is provided, wherein the capacitor (C_{T}, C_{H}) and the diode (D_{T}, D_{H}) of the LCD element are connected to one another in series and the inductance (L₁) of the LCD element can be connected either in parallel to the diode (D_{T}, D_{H}) or disconnected from it by means of a switch (S, S_{T}, S_{H}), and wherein the diode (D_{T}, D_{H}) of the LCD element is arranged such that it blocks in the conducting direction of the semiconductor switch (T_{T}, T_{H}).

## Revendications

1. Convertisseur de tension continue pouvant être mis en oeuvre en tant que convertisseur élévateur et convertisseur abaisseur et dans lequel une inductance (L₁) peut être chargée et déchargée cycliquement en tant qu'accumulateur d'énergie actif au moyen d'un ou de plusieurs commutateurs semi-conducteurs (T_{T}, T_{H}), notamment des transistors, **caractérisé en ce que**, pour éviter des suroscillations de tension pour au moins un commutateur semi-conducteur (T_{T}, T_{H}), un élément RCD est prévu, le condensateur (C_{T}, C_{H}) et la diode (D_{T}, D_{H}) de l'élément RCD étant montés en série entre eux et la résistance (R, R_{T}, R_{H},) de l'élément RCD pouvant être, au moyen d'un commutateur (S, S_{T}, S_{H}), connectée en parallèle avec la diode (D_{T}, D_{H}) ou déconnectée, et la diode (D_{T}, D_{H}) de l'élément RCD étant agencée de manière à fermer dans le sens passant du commutateur semi-conducteur (T_{T}, T_{H}).

2. Convertisseur de tension continue pouvant être mis en oeuvre en tant que convertisseur élévateur et convertisseur abaisseur et dans lequel une inductance (L₁) peut être chargée et déchargée cycliquement en tant qu'accumulateur d'énergie actif au moyen d'un ou de plusieurs commutateurs semi-conducteurs (T_{T}, T_{H}), notamment des transistors, **caractérisé en ce que**, pour éviter des suroscillations de tension pour au moins un commutateur semi-conducteur (T_{T}, T_{H}), un élément LCD est prévu, le condensateur (C_{T}, C_{H}) et la diode (D_{T}, D_{H}) de l'élément LCD étant montés en série entre eux et l'inductance (L_{T}, L_{H},) de l'élément LCD pouvant être, au moyen d'un commutateur (S, S_{T}, S_{H}), connectée en parallèle avec la diode (D_{T}, D_{H}) ou déconnectée, et la diode (D_{T}, D_{H}) de l'élément LCD étant agencée de manière à fermer dans le sens passant du commutateur semi-conducteur (T_{T}, T_{H}).
